# NEUE EUROPÄISCHE PATENTSCHRIFT

(11) **EP 0 935 336 B2**
(45) Veröffentlichungstag und Bekanntmachung des Hinweises auf die Entscheidung über den Einspruch: **10.05.2006**
(45) Hinweis auf die Patenterteilung: 04.12.2002
(21) Anmeldenummer: 99102107.2
(22) Anmeldetag: 03.02.1999
(51) Int. Cl.: H02P 6/24

(54) **Verfahren und Vorrichtung zur Steuerung eines Synchronmotors**
Method and device for controlling a synchronous motor
Méthode et dispositif de commande d' un moteur synchron

(30) Priorität: 07.02.1998 DE 19804967
(43) Veröffentlichungstag der Anmeldung: 11.08.1999
(73) Patentinhaber: Diehl AKO Stiftung & Co. KG, 88239 Wangen im Allgäu (DE)
(72) Erfinder: Weinmann, Martin Dipl.-Ing., 88339 Bad Waldsee (DE); Zeh, Stefan Dipl.-Ing., 88299 Leutkirch (DE)
(74) Vertreter: Diehl Patentabteilung

(56) Entgegenhaltungen:
- EP-A- 0 078 394
- EP-A- 0 662 266
- EP-A- 0 714 162
- WO-A-97/05691
- DE-A- 3 614 093
- PATENT ABSTRACTS OF JAPAN vol. 013, no. 483 (E-839), 2. November 1989 (1989-11-02) & JP 01 190286 A (TEAC CORP), 31. Juli 1989 (1989-07-31)

## Beschreibung

Die Erfindung betrifft ein Verfahren gemäß dem Oberbegriff des Anspruches 1 und eine Vorrichtung gemäß dem Oberbegriff des Anspruches 3 zum Betreiben eines mit einem Permanentmagnet-Läufer ausgestatteten Synchronmotors.

Elektronisch kommutierte, aus einer Gleichspannungsquelle über gesteuerte Umrichter betriebene Synchronmotoren sind aus der Literatur und aus der Anwendungspraxis bekannt. Zum Erhöhen der Drehzahl über die Grenzdrehzahl bei feldorientiertem Betrieb hinaus können solche Synchronmotoren unter Feldschwächung betrieben werden, wie es etwa in der DE 32 03 911 A1, in der DE 34 24 402 C1, in der DE 40 21 098 A1 oder in der EP 0 662 266 B1 näher dargestellt ist.

Zum Reduzieren der Motordrehzahl ist elektrodynamisches Bremsen üblich. So beschreibt die WO 97/05691 A1 das dynamische Abbremsen eines Servomotors nach Maßgabe eines Bremssignals, das von einem Pulsbreitenmodulator geliefert wird und über die Schalter jeweils der einen Hälfte von Brückenzweigen die hier angeschlossenen Wicklungsstränge kurzschließt.

Gemäß der DE 36 14 093 A1 wird nach dem Einleiten des Bremsvorganges durch einen Klemmenkurzschluß bei einem über einen Pulswechselrichter gespeisten bürstenlosen Gleichstrommotor ein bremsend wirkendes Stromsystem aufgebaut, bis der maximal auftretende Motorstrom einen Grenzwert erreicht, um nun unter entsprechender Abschwächung der Bremswirkung den Klemmenkurzschluß über die Schaftmittels des Pulswechselrichters vorübergehend wieder aufzuheben.

Nach der D E 33 32 938 A1 wird eine verkürzte Nachlaufdauer des dynamisch gebremsten Rotors dadurch erzielt, daß die Motorwicklungen von zwei der drei sie speisenden Phasen elektrisch getrennt und anschließend auf einen vor der Trennstelle einer Phase angeschlossenen Bremskondensator geschaltet werden, dessen Ladezustand gerade die zum Abbremsen benötigte Bremsenergie liefert.

Aus der DE 44 19 351 A1 ist es zum Bremsen eines invers drehenden, am Gleichspannungsnetz betriebenen Synchronmotors bekannt, eine während der Inversdrehung des Rotors in den Wicklungssträngen des Stators induzierte Spannung mit einem Schwellwert zu vergleichen und dann in Abhängigkeit von diesem Vergleich eine definierte Bestromung der Wicklungsstränge über Schaltmittel einzuleiten, die von einer Kommutierungsvorrichtung angesteuert werden. Dadurch soll der Rotor aus jeder beliebigen Inversdrehung und insbesondere von jeder beliebigen Drehzahl aus exakt auf eine bestimmte Rotorstellung abgebremst werden können, um daraufhin einen drehrichtigen Hochlauf zu starten.

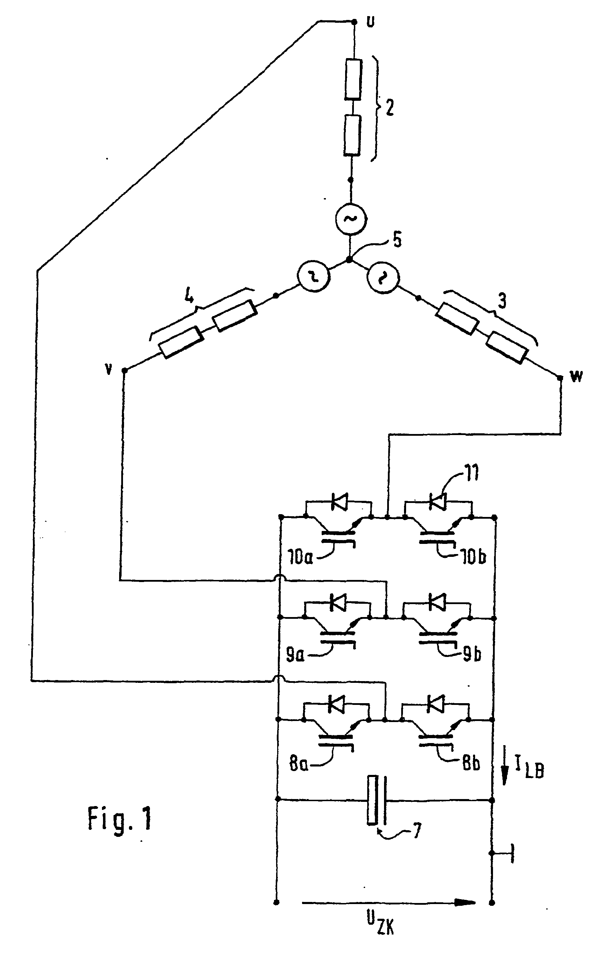

Zur Erläuterung der Problematik beim Stand der Technik ist in Figur 1 beispielhaft das Prinzipschaltbild eines herkömmlichen dreisträngigen, sechspulsigen Synchronmotors mit Permanenterregung gezeigt, wie er auch der vorliegenden Erfindung zugrundeliegt. Die drei Wicklungsstränge 2, 3 und 4 des Stators werden in an sich bekannter Weise über die sechs Schaltelemente 8-10 der Leistungsbrücke 7-11 mit der beispielsweise von einem nicht gezeigten Zwischenkreisumrichter zugeführten Zwischenkreisspannung U_{ZK} gespeist. Die Schaltelemente 8-10 werden von einer nicht gezeigten Motorsteuerung oder Kommutierungsvorrichtung angesteuert. Wird der gezeigte Synchronmotor im Feldschwächbereich betrieben, so können durch die feldschwächenden Blindströme bei manchen Anwendungen Drehzahlen bis zum dreifachen der vorgegebenen natürlichen Grenzdrehzahl erreicht werden.

Bei kritischen Zuständen, wie zum Beispiel bei einer zu hohen oder zu niedrigen Zwischenkreisspannung U_{ZK}, oder bei einem Ausfall der Steuerelektronik kehren üblicherweise sämtliche Schaltelemente 8-10 in ihren offenen Grundzustand zurück. In diesem Schaltungszustand kann der Zwischenkreiskondensator 7 derLeistungsbrücke7-11 über die den Schaltelementen 8-10 parallel geschalteten Freilaufdioden 11 aufgeladen werden. Wird der Synchronmotor im feldorientierten Bereich betrieben, so wird der Zwischenkreiskondensator 7 vom Umrichter maximal auf die Zwischenkreisspannung U_{ZK} aufgeladen; bei Betrieb im Feldschwächbereich kann der Zwischenkreiskondensator 7 bei maximaler Drehzahl gemäß der mit dem Feldschwächbetrieb einhergehenden Erhöhung der Drehzahl bis zum dreifachen der Zwischenkreisspannung aufgeladen werden. Aus diesem Grund muß bei herkömmlichen Synchronmotor-Steuerungen die in Fig. 1 gezeigte Leistungsbrücke 7-11 und insbesondere der Zwischenkreiskondensator 7 für sehr große Spannungen ausgelegt sein, was höhere Herstellkosten verursacht.

Nun ist aus der EP 0 742 637 A1 eine Vorrichtung zum sicheren Abbremsen eines elektrischen Antriebes bekannt, bei welcher - um bei elektrischen Antrieben im Fehlerfall eine Notbremsung herbeizuführen - in der Steuerung eine Möglichkeit zur Herstellung eines integrierten Ankerkurzschlusses geschaffen wird. Dazu wird eine Wechselrichter-Brücke in sicherer Technik gesperrt, während die andere Wechselrichter-Brücke durch getaktete Ansteuerung einen Kurzschluss der Phasen des elektrischen Antriebes herbeiführt. Die in der EP 0 742 637 A1 beschriebene Schaltungsanordnung wird auch nach einem Ausfall des zentralen Signalprozessors der Steuerung aktiv, da sie eigenständig und unabhängig von anderen Schaltungsmitteln zur Steuerung des elektrischen Antriebes funktionsfähig ist und anspricht. Diese Schaltungsanordnung hat jedoch den Nachteil, dass bei einem Ausfall des gesamten Regelungsteils die Möglichkeit besteht, dass der Leistungsteil kurzgeschlossen wird.

Ausgehend von dem vorgenannten Stand der Technik ist es Aufgabe der Erfindung, mit einfachen Mitteln eine Steuerung für einen Synchronmotor vorzusehen, bei welcher auch bei einem völligen Ausfall des Regelungsteils ein Kurzschluss des Leistungsteils sicher verhindert wird. Diese Aufgabe wird durch die Vorrichtungsmerkmale des Anspruchs 1 gelöst.

Durch das Kurzschließen der Motorklemmen über die Leistungsbrücke zum Abbremsen des Motors und/oder bei kritischen Zuständen mittels einer Schutzschaltung kann wirksam verhindert werden, daß der Zwischenkreiskondensator der Leistungsbrücke durch die in den Wicklungssträngen des Stators durch die Rotordrehung induzierten Spannungen aufgeladen wird. Aufgrund dieser induzierten Spannungen fließt in den Wicklungssträngen des Stators und über die Schaltmittel außerdem nur ein Strom, der durch die Motorimpe-danz begrenzt wird. Bei gängigen Motorauslegungen bleibt dieser Strom im Rahmen der Nennauslegung des Antriebssystems, so daß die Elemente der Leistungsbrücke und insbesondere der Zwischenkreiskondensator kostengünstig ausgelegt werden können.

Erfindungsgemäß wird nun der Motorsteuerung eine Default-Beschaltung nachgeschaltet, welche bei hochohmigen Ausgangssignalen, d.h. insbesondere bei einem Ausfall der Motorsteuerung, die Motorklemmen automatisch kurzschließt.

Weitere Ausgestaltungen und Weiterbildungen der vorliegenden Erfindung sind Gegenstand weiterer Unteransprüche.

Die Erfindung wird im folgenden anhand eines bevorzugten Ausführungsbeispieles unter Bezugnahme auf die beiliegende Zeichnung näher erläutert. Darin zeigen:
- Fig. 1: das Ersatzschaltbild eines Synchronmotors; und
- Fig. 2: das Prinzipschaltbild einer Steuerung des Synchronmotors von Fig. 1.

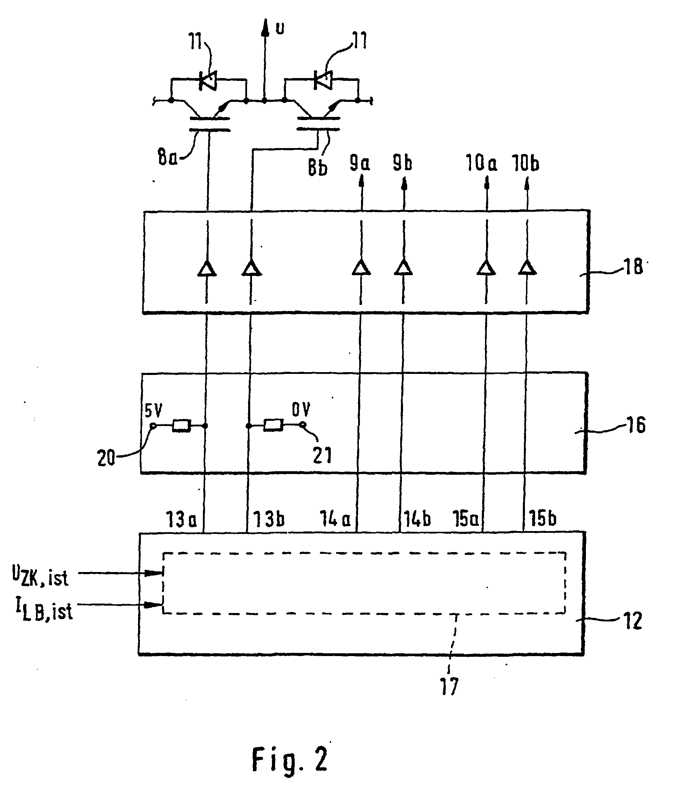

In Fig. 1 ist das Ersatzschaltbild eines elektronisch kommutierten Synchronmotors dargestellt. Der Synchronmotor weist in seinem nicht dargestellten Stator drei in Stern geschaltete Wicklungsstränge 2, 3 und 4 auf, die einerseits in einem Sternpunkt 5 und andererseits jeweils mit einer Anschlußklemme u, v, w des Motors verbunden sind. Der Synchronmotor besitzt weiterhin einen nicht dargestellten Rotor, der einen Permanentmagneten trägt. Bei dem in Fig. 1 gezeigten Ausführungsbeispiel handelt es sich um einen dreisträngigen, sechspulsigen Synchronmotormit Permanenterregung. Es sei an dieser Stelle ausdrücklich darauf hingewiesen, daß die vorliegende Erfindung grundsätzlich für alle Arten von Mehrphasen-Synchronmotoren anwendbar ist und die in Fig. 1 und 2 dargestellten Schaltungen nur ein bevorzugtes Ausführungsbeispiel zeigen.

Die Anschlußklemmen u, v und w sind weiter jeweils mit dem Mittelabgriff zwischen zwei Schaltmitteln der Leistungsbrücke, im gezeigten Ausführungsbeispiel Leistungstransistoren 8a und 8b bzw. 9a und 9b bzw. 10a und 10b, verbunden. Die Steueranschlüsse der Leistungstransistoren 8-10 sind, wie in Fig. 2 gezeigt, mit den Ausgängen 13-15 einer Motorsteuerung 12 elektrisch verbunden, wobei die Steueranschlüsse der Schaltmittel 8-10 vorzugsweise über MOS-Gate Driver 18 angesteuert werden. Die MOS-Gate Driver 18 dienen dabei im wesentlichen zur Pegelanpassung der Spannungspegel der Ausgänge 13 - 15 der Motorsteuerung 12 an die Steueranschlüsse der Leistungstransistoren 8 - 10.

Parallel zu den Anschlüssen einer Konstantstromquelle bzw. eines Zwischenkreis-Umrichters ist ein Zwischenkreiskondensator 7 geschaltet, der als Glättungskondensator für die Zwischenkreisspannung U_{ZK} dient. Ferner ist zu den Schaltmitteln 8-10 jeweils eine Freilaufdiode 11 mit entgegengesetzter Durchlaßrichtung parallel geschaltet.

In die Motorsteuerung 12 ist eine in Fig. 2 schematisch dargestellte Schutzschaltung 17 integriert, die zum Abbremsen des Motors und bei kritischen Zuständen die Motorklemmen u, v und w kurzschließt, indem entweder die "oberen" drei Schaltmittel 8a, 9a und 10a oder die "unteren" drei Schaltmittel 8b, 9b und 10b geschlossen werden. In derTerminologie der "Space Vector Modulation" wird einer der beiden Null-Vektoren [000] oder [111] angelegt. Kritische Zustände können beispielsweise sein eine zu hohe oder zu niedrige Zwischenkreisspannung U_{ZK} oder ein Überstrom I_{LB} im Kreis der Leistungsbrücke 7-11. Zur Erkennung solcher kritischen Zustände wird sowohl die Zwischenkreisspannung U_{ZK} als auch der in der Leistungsbrücke 7-11 fließende Strom I_{LB} überwacht und die ermittelten Meßsignale U_{ZK,ist} und I_{LB,ist} der Motorsteuerung 12 zugeführt. Im kritischen Fall wächst die Zwischenkreisspannung im allgemeinen langsam, so daß die Motorsteuerung 12 rechtzeitig reagieren kann.

In diesem Bremsmodus fließt aufgrund der in den Wicklungssträngen 2-4 durch die Rotordrehung induzierten Spannungen ein Strom, der durch die Motorimpedanz begrenzt wird. Bei gängigen Motorauslegungen bleibt dieser Strom im Rahmen der Nennauslegung des Antriebssystems. Die in den ohm'schen Widerständen des Motors umgesetzte Wärmeleistung bestimmt dabei die Bremsleistung des Motors bei diesem Bremsvorgang.

Zusätzlich ist es von Vorteil, der Motorsteuerung 12 eine sogenannte Default-Beschaltung 16 nachzuschalten, die immerdann wirksam wird, wenn die Motorsteuerung 12 und damit auch die Schutzschaltung 17 ausfällt und die Ausgänge 13-15 der Motorsteuerung 12 hochohmig werden. Ein Ausfall der Motorsteuerung 12 kann beispielsweise durch elektromagnetische Störungen oder versehentlich gemessene Überströme I_{LB} verursacht werden. In einem solchen Fall sorgt die Default-Beschaltung 16 dafür, daß die MOS-Gate Driver 18 die Schaltmittel 8-10 im oben beschriebenen Bremsmodus ansteuern, d.h. die Motorklemmen u, v und w kurzschließen.

In Fig. 2 ist beispielhaft die Ansteuerung der Schaltmittel 8a und 8b detaillierter dargestellt; die Ansteuerung der übrigen Schaltmittel 9a, 9b und 10a, 10b erfolgt in analoger Weise. Die der Motorsteuerung 12 nachgeschaltete Default-Beschaltung 16 besteht im einfachsten, in Fig. 2 gezeigten Fall aus einer zusätzliche Spannungsversorgung mit den Anschlüssen 20 und 21. Dabei ist die Ansteuerung des oberen Schaltmittels 8a auf positives Potential, beispielsweise + 5 V, und die Ansteuerung des unteren Schaltmittels 8b auf Grundpotential, d.h. 0 V, gelegt.

Durch diese Defauft-Beschaltung 16 wird bei einem Ausfall der Motorsteuerung 12, d.h. wenn die Ausgänge 13a und 13b hochohmig werden, das obere Schaltmittel 8a aufgrund des Potentials 20 durch den MOS-Gate Driver 18 geschlossen, während das untere Schaltmittel 8b weiterhin offen bleibt. Analog werden bei einem Ausfall der Steuerung 12 die oberen Schaltmittel 9a und 10a geschlossen, während die entsprechenden unteren Schaltmittel 9b und 10b im offenen Grundzustand bleiben. In gleicher Weise ist es natürlich auch möglich, die beiden Anschlüsse 20 und 21 der Default-Beschaltung 16 zu vertauschen und auf diese Weise die unteren Schaltmittel 8b, 9b und 10b zu schließen, während die oberen Schaltmittel 8a, 9a und 10a offen bleiben.

Im Falle einer ordnungsgemäß funktionierenden Motorsteuerung 12, d.h. wenn die Motorsteuerung nicht ausgefallen ist, werden die von der Default-Beschaltung 16 angelegten Potentiale von den Ausgangssignalen 13-15 der Motorsteuerung 12 bzw. der in der Motorsteuerung 12 integrierten Schutzschaltung 17 überschrieben.

Die Kleinsignalspannungsversorgung für die Motorsteuerung 12 oder zumindest für die MOS-Gate Driver 18 und die Default-Beschaltung 16 wird dabei vorteilhafterweise aus der Zwischenkreisspannung U_{ZK} abgeleitet, so daß auf zusätzliche Spannungsversorgungsquellen verzichtet werden kann.

### Bezugszeichenliste

- 2: Wicklungsstrang
- 3: Wicklungsstrang
- 4: Wicklungsstrang
- 5: Sternpunkt
- 7: Zwischenkreiskondensator
- 8a, 8b: Schaltmittel
- 9a, 9b: Schaltmittel
- 10a, 10b: Schaltmittel
- 11: Freilaufdioden
- 12: Motorsteuerung
- 13a, 13b: Ausgänge der Motorsteuerung
- 14a, 14b: Ausgänge der Motorsteuerung
- 15a, 15b: Ausgänge der Motorsteuerung
- 16: Default-Beschaltung
- 17: Schutzschaltung
- 18: MOS-Gate Driver
- 20: Anschluß der Default-Spannungsversorgung
- 21: Anschluß der Default-Spannungsversorgung
- u, v, w: Motorklemmen

## Patentansprüche

1. Vorrichtung zum Betreiben eines mit einem Permanentmagnet-Läufer ausgestatteten Synchronmotors über eine elektronisch kommutierte Brückenschaltung, die auf Bremsbetrieb durch einen Kurzschluss über wenigstens einige der Motor-Wicklungsstränge umschaltbar ist,
wobei eine Schutzschaltung (17) vorgesehen ist, die ein Umschalten einer Motorsteuerung auf Kurzschluss veranlasst, sobald und so lange sich kritische Betriebszustände, insbesondere infolge momentanen Ausfalles oder sonstigen Fehlverhaltens der Motorsteuerung, einstellen,
**dadurch gekennzeichnet,**
**dass** die Brückenschaltung aus der Motorsteuerung auf Betrieb in Feldschwächung ansteuerbar ist und dass der Motorsteuerung (12) eine Default-Beschaltung (16) folgt, welche bei hochohmigen Ausgangssignalen (13,14,15) der Motorsteuerung (12) die Klemmen der Motor-Wicklungsstränge (u, v, w) kurzschließt.

2. Vorrichtung nach Anspruch 1,
**dadurch gekennzeichnet,**
**dass** eine Spannungsversorgung wenigstens für die Default-Schaltung (16) aus der die Motor-Wicklungsstränge (2,3,4) speisenden Spannung (U_{ZK}) abgeleitet ist.

3. Vorrichtung nach Anspruch 1 oder 2,
**dadurch gekennzeichnet,**
**dass**, für einen Kurzschluss über die Schaltmittel (8,9,10) der Leistungsbrücke, jeweils ein MOS-Geräte-Treiber (18) vorgesehen ist.

## Claims

1. A device for operating a synchronous motor, fitted with a permanent magnet rotor, via an electronically commutated bridge circuit which can be switched over to braking operation by a short circuit across at least some of the phase windings of the motor,
a protection circuit (17) being provided which instigates a switching over of a motor control to short circuit as soon as and for as long as critical operating conditions prevail, particularly as a result of a temporary breakdown or other malfunctioning of the motor control,
**characterized in that**
the bridge circuit can be activated from the motor control for operation in field weakening, and **in that** the motor control (12) is followed by a default circuit (16) which, in the case of high-resistance output signals (13, 14, 15) from the motor control (12), short circuits the terminals of the phase windings (u, v, w) of the motor.

2. A device according to Claim 1,
**characterized in that**,
at least for the default circuit (16), a voltage supply is derived from the voltage (U_{ZK}) feeding the phase windings (2, 3, 4) of the motor.

3. A device according to Claim 1 or 2,
**characterized in that**
in each case a MOS device driver (18) is provided for a short circuit across the switching means (8, 9, 10) of the power bridge.

## Revendications

1. Procédé de mise en oeuvre d'un moteur synchrone doté d'un rotor à aimant permanent, par l'intermédiaire d'un montage en pont à commutation électronique, qui peut être commuté sur fonctionnement en frein par un court-circuit portant sur au moins quelques-uns des enroulements du moteur, un circuit de protection étant prévu, qui provoque une commutation de la commande du moteur sur court-circuit dès que s'établissent des états de fonctionnement critiques, en particulier par suite d'une défaillance ou d'un dysfonctionnement momentanés de la commande, et tant qu'ils durent
**caractérisé en ce que**
le montage en pont peut être commandé, à partir de la commande du moteur, en marche sur atténuation du champ et **en ce que** la commande du moteur (12) est suivie d'un circuit par défaut (16), lequel, pour des signaux de sortie à haute impédance (13, 14, 15) de la commande du moteur (12), court-circuite les bornes des enroulements du moteur (u, v, w).

2. Dispositif selon la revendication 1, **caractérisé en ce qu'**une alimentation en courant est extraite, au moins pour le circuit par défaut (16), de la tension (U_{ZK}) alimentant les enroulements du moteur (2, 3, 4).

3. Dispositif selon une des revendications 1 ou 2, **caractérisé en ce que**, pour chaque court-circuit par les moyens de commutation (8, 9, 10) du pont de puissance est prévu un pilote de porte MOS (18).
